Europäisches Patentamt

(19) European Patent Office

Office européen des brevets

(11) Numéro de publication: **0 148 714**
A1

## (12) DEMANDE DE BREVET EUROPEEN

(21) Numéro de dépôt: 84430043.4

(22) Date de dépôt: 05.12.84

(51) Int. Cl.⁴: **B 60 R 11/02, H 05 K 11/02**

(30) Priorité: 20.12.83 FR 8320523

(43) Date de publication de la demande: 17.07.85
Bulletin 85/29

(84) Etats contractants désignés: **BE CH DE GB IT LI NL SE**

(71) Demandeur: **Guery, Jean, Résidence Porte d'Azur A Route de Marseille, F-83150 Bandol (FR)**

(72) Inventeur: **Guery, Jean, Résidence Porte d'Azur A Route de Marseille, F-83150 Bandol (FR)**

(74) Mandataire: **Roman, Alphonse, 35 Rue Paradis, F-13001 Marseille (FR)**

(54) **Console de toit fonctionnelle pour radio téléphone adaptable à tous véhicules.**

(57) Dispositif de console de toit fonctionnelle pour radio téléphone adaptable à tous véhicules.

Il est constitué par la combinaison d'une capacité profilée formant console (1) adaptable sur le parement interne du toit du véhicule logeant les appareillages émetteurs-récepteurs, les connexions circuits et autres, alors que sa paroi extérieure sert de support au cadran d'appel (5), haut-parleur (6), récepteurs (7, 8, 9, 10) mobiles à lignes enroulables et orientables en tous sens et au tableau général des commandes.

Il est destiné à équiper aussi bien les véhicules automobiles que terrestres, maritimes, aériens ou autres, afin de permettre sous un volume réduit adaptable à toutes carrosseries d'obtenir un rendement fonctionnel équivalent.

- 1 -

## Console de toit fonctionnelle pour radio-téléphone adaptable à tous véhicules

Dispositif de console de toit fonctionnelle pour radio-téléphone adaptable à tous véhicules.

Il est destiné à équiper aussi bien les véhicules automobiles que terrestres, maritimes, aériens ou autres, afin de permettre sous un volume réduit adaptable à toutes carrosseries d'obtenir un rendement fonctionnel équivalent.

Dans les dispositifs connus à ce jour, les téléphones existant déjà à bord des véhicules consistaient en un combiné émetteur-récepteur reposant sur un support installé en un point quelconque impliquant obligatoirement une manipulation de la part de l'utilisateur présentant un caractère apparent, encombrant, et qui, par son emplacement risquait un endommagement de l'appareillage par chocs ou autres contacts accidentels.

Le dispositif suivant l'invention supprime ces inconvénients et permet de libérer totalement les mains du conducteur lorsqu'il utilise l'appareil, tout en lui donnant la possibilité ainsi qu'aux usagers placés à l'avant ou à l'arrière de communiquer, soit confidentiellement, soit collectivement avec écoute générale ou écoute individuelle, tout en protégeant les circuits, contacts et autres éléments des atteintes extérieures, sans nuire à l'esthétique de la carrosserie.

Il est constitué par la combinaison d'une capacité profilée formant console adaptable sur le parement interne du toit du véhicule logeant les appareillages émetteurs-récepteurs, les connexions circuits et autres, alors que sa paroi extérieure sert de support au cadran d'appel, haut-parleur, récepteurs mobiles à lignes enroulables et orientables en tous sens et accessibles de l'extérieur à l'émetteur orientable en tous sens et au tableau général des commandes.

Sur les dessins annexés, donnés à titre d'exemple non limitatif d'une des formes de réalisation de l'objet de l'invention :

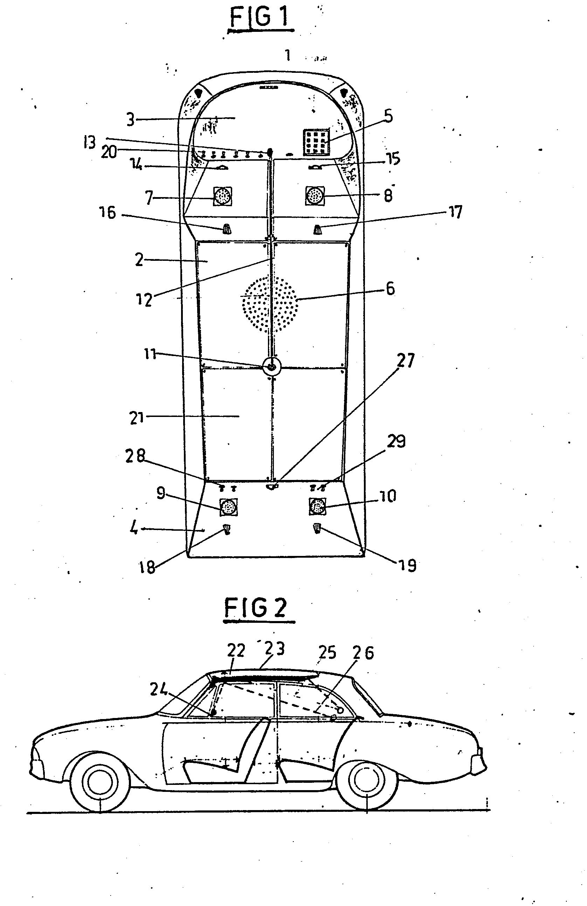

La figure 1 représente vu en élévation le parement externe de la console radio-téléphone ; la figure 2 montre une des applications du dispositif.

La console radio-téléphone, figure 1, est constituée par un carter 1 formant capacité fermée, destinée à contenir tous les appareillages émetteurs-récepteurs, les circuits électroniques ou autres, et en général tous les accessoires connus et à venir des radios-téléphones.

Le carter lorsqu'il est adaptable à une voiture automobile, a une partie parallélépipédique 2, une extrémité coudée formant pupitre 3 et un parement arrière oblique 4 avec tous les profils, courbures ou contre coudages fonctionnels facilitant l'accès et le fonctionnement des appareillages.

Son parement extérieur supporte le cadran d'appel 5, un haut-parleur intégré 6 et quatre écouteurs 7, 8, 9, 10 montés sur enrouleur avec dispositif de fixation sur les oreilles suivant les nécessités.

Le microphone 13 est adapté, par assemblage à baïonnette par exemple, sur gaine semi-rigide 12 orientable en tous sens et qui sert de support guide ou fil auquel il est relié par une extrémité et dont l'autre terminaison finit sur un enrouleur.

Des potentiomètres 14, 15 et 27 sont utilisés pour régler les volumes de réception ou d'émission.

Un éclairage de secours 16; 17, 18, 19 peut être prévu. La paroi est préférentiellement formée par des panneaux démontables donnant accès à l'appareillage interne.

De multiples accessoires 20, 28, 29 tels que la commande de changement de zone géographique ou même en circuit sélectionné d'un ou plusieurs haut- -parleurs peuvent être montés sur cette console fonctionnelle, ceci sans limitation.

Cette installation utilisant les circuits connus et à

0148714

- 4 -

venir, adaptés au positionnement des organes,

supprime les effets de Larsen, vue la distance et les angles entre les positions de l'émetteur et des récepteurs.

Cette console 22, figure 2, est placée préférentiellement sous le parement interne du toit 23, de sorte que le conducteur puisse avoir le microphone 13 dans la position utilitaire 24 avec sa gaine semi-rigide 12 orientable.

En utilisant le haut-parleur 6 ou l'écouteur 7, adaptable à l'oreille pour écoute privée, le conducteur peut avoir ses deux mains libres, ce qui lui permet de communiquer sans quitter les commandes de sa voiture en marche.

Par contre si un des passagers veut avoir une conversation privée, il utilise l'un des écouteurs avec la ligne déroulable 25 et le microphone à ligne extensible 26 également déroulable.

Cette console est préférentiellement constituée par des éléments modulables interchangeables correspondants aux panneaux 21 et autres, ce qui permet un entretien avec remplacement instantané des éléments défectueux.

Il est prévu que cette console peut se placer d'une façon fixe ou amovible en tous points de la carrosserie.

Sa forme fonctionnelle et sa coloration facilite son intégration à tous types de carrosserie sans occasionner une gêne et tout en protégeant les organes fragiles contre les agressions extérieures aussi bien chimiques que mécaniques.

Il est également possible d'utiliser les espaces vides de la capacité pour installer des appareils de sécurité, avertisseurs contre le vol ou autre, ou même d'intégrer une source d'énergie auxiliaire, telles que piles ou autres en cas de panne du circuit électrique de la voiture.

Des répondeurs automatiques sont branchables ainsi que les accessoires classiques de télécommunications.

C'est pourquoi il permet une écoute confidentielle par le conducteur et/ou par un ou plusieurs occupants du véhicule, en ce sens, que dès que l'un au moins des écouteurs 7, 8, 9, 10 est mis, en fonction par des commandes 20, 28, 29, l'écoute générale émise par le haut-parleur 6 est interrompue. Ensuite l'appel ou la réception peuvent s'exécuter par l'un quelconque des occupants, sans faire intervenir les autres, par le moyen: des commandes 20, 28, 29 qui peuvent avoir la même fonction. Des potentiomètres 14, 15, et autres peuvent être disposés sur la surface portante en des points variables.

Le cadran d'appel 5 placé à l'avant peut faire l'objet d'une double commande permettant d'avoir un autre cadran à l'arrièresur le parement oblique 4. La console peut être adaptable à tous véhicules et présenter toutes les formes extérieures voulues

avec les couleurs et matières appropriées et les dimensions adaptées aux besoins de chaque application.Cette console support peut être installée dans différentes orientations en fonctions du véhicule sur lequel elle doit être adaptée. Elle est démontable pour vérification ou adaptation technique d'un ou plusieurs modules fonctionnels. Ses éléments constitutifs peuvent avoir des emplacements différents de ceux exposés dans la Fig 1, pourvu que les impératifs techniques (distance-orientation) soient respectés concernant l'effet Larsen.

C'est pourquoi les formes, dimensions et dispositions des différents éléments pourront varier dans la limite des équivalents, comme d'ailleurs les matières utilisées pour leur fabrication, sans changer pour cela, la conception générale de l'invention qui vient d'être décrite.

- 1 -

Revendications de brevet

1. Dispositif de console de toit pour radio-téléphone adaptable à tous véhicules permettant de libérer totalement les mains du conducteur, tout en donnant la possibilité au conducteur et aux usagers placés à l'avant ou à l'arrière de communiquer, soit individuellement, confidentiellement ou collectivement, se caractérisant par la combinaison d'une capacité (1) avec profilage fonctionnel adaptable sur son support contenant intérieurement tous les appareillages émetteurs-récepteurs par alvéoles modulables et interchangeables amovibles, circuits et autres et sur son parement externe (2) les haut-parleurs (6), écouteurs (7, 8, 9,10) avec clavier d'appel (5) microphone (13) tableau de commande (20, 28, 29) et autres accessoires.

2. Dispositif suivant la revendication 1 se caractérisant par le fait que la capacité avec parois latérales périphériques montées avec le support comporte sur sa face inférieure des panneaux amovibles (21) et autres pour accès aux appareillages protégés avec montage modulaire préférentiel.

3. Dispositif suivant la revendication 1 se caractérisant par le fait que le haut-parleur (6) est fixe, alors que les écouteurs (7, 8, 9, 10) sont montés sur lignes déroulables (25) et autre avec dispositif de fixation aux oreilles.

4. Dispositif suivant la revendication 1 se caractérisant par le fait que le microphone (13) est monté sur gaine semi rigide orientable en tous sens (12) elle-même reliée à une ligne déroulable (26) lui permettant d'atteindre omnidirectionnellement toutes les parties de la carrosserie du véhicule.

5. Dispositif suivant la revendication 1 se caractérisant par le fait que la paroi latérale ou la paroi de fond de la console (1) servent de support à des potentiomètres (14, 15, 27), des éclairages (16, 17, 18, 19) et à de multiples accessoires tels que interrupteurs commande (20, 28, 29) et autres anti-vol, radar, montre quartz, énergie auxilliaire assurant l'autonomie du concept, répondeur téléphonique, mini-ordinateur, etc... sans limitation.

6. Dispositif suivant la revendication 1 se caractérisant par le fait que la console formant carter fonctionnel comporte des coudages (3) et contre-coudages (4) facilitant l'accès des commandes.

7. Dispositif suivant la revendication 1 se caractérisant par le fait que le carter (22) se place pour le véhicule automobile sous le plafond (23) dans la projection de la gaine orientable prenant la position (24), alors que les lignes extensibles (25, 26) atteignent tous les espaces d'occupation du véhicule.

1/1                                    0148714

FIG 1

FIG 2

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-3 009 483 (SIEMENS)<br>* Revendications 1-5 * | 1,7 | B 60 R  11/02<br>H 05 K  11/02 |
| Y | US-A-3 944 924 (BELTEK)<br>* Résumé * | 1,4 | |
| P,A | DE-A-3 316 818 (ERNST)<br>* Page 3, dernier paragraphe; figure 1 * | 1,3,5 | |
| A | US-A-4 100 372 (HYPOLITE) | | |
| A | FR-A-2 495 883 (REMY) | | |

| | | | DOMAINES TECHNIQUES RECHERCHES (Int. Cl.4) |
|---|---|---|---|
| | | | B 60 R<br>H 05 K |

| Le présent rapport de recherche a été établi pour toutes les revendications | | |
|---|---|---|
| Lieu de la recherche<br>LA HAYE | Date d'achèvement de la recherche<br>22-03-1985 | Examinateur<br>SCHMITTER J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82